# EUROPÄISCHE PATENTSCHRIFT

(11) **EP 0 898 680 B1**
(45) Veröffentlichungstag und Bekanntmachung des Hinweises auf die Patenterteilung: **21.11.2001**
(21) Anmeldenummer: 97924911.7
(22) Anmeldetag: 23.05.1997
(51) Int. Cl.: F21S 2/00, B64F 1/20

(54) **UNTERFLURFEUER MIT RÄUMLICH ORIENTIERTER LICHTVERTEILUNG**
FLUSH LIGHTING DEVICE WITH SPATIAL LIGHT DISTRIBUTION
DISPOSITIF D'ECLAIRAGE AVEC FEU ENCASTRE A DIFFUSION DE LA LUMIERE ORIENTEE DANS L'ESPACE

(30) Priorität: 23.05.1996 DE 29609280 U
(43) Veröffentlichungstag der Anmeldung: 03.03.1999
(73) Patentinhaber: SIEMENS AKTIENGESELLSCHAFT, 80333 München (DE)
(72) Erfinder: GOERKE, Reinhard, B-1030 Brüssel (BE)
(86) Internationale Anmeldenummer: DE9701046
(87) Internationale Veröffentlichungsnummer: WO9744611

(56) Entgegenhaltungen:
- EP-A- 0 022 106
- DE-A- 1 941 430
- DE-A- 4 222 592
- DE-A- 4 222 897
- DE-U- 8 803 569
- GB-A- 2 068 523
- US-A- 2 352 801

## Beschreibung

Die Erfindung betrifft ein Überrollfähiges Unterflurfeuer mit räumlich orientierter Lichtverteilung für Flughafenrollbahnen und -Taxiways, das in einem Gehäuse zumindest eine Reflektorlampe zur Lichterzeugung und zumindest eine Linse oder ein linsenartig wirkendes Prisma zur Lichtaustrittsführung aufweist.

Aus der DE 690 17 682 T2 ist eine dem vorstehenden entsprechende Leuchteinrichtung bekannt. Diese bekannte Leuchteinrichtung weist im Inneren einen Reflektionsspiegel für einen Teil des von der Lampe abgestrahlten Lichts auf, der unvorteilhafterweise ein gesondertes, einzeln zu montierendes und zu justierendes, Teil darstellt.

Aus der DE 1 941 430 A1 ist weiterhin ein Markierungslicht mit niedrigem Profil bekannt, insbesondere für Hochgeschwindigkeitsfahrzeuge o.ä., bei dem das Licht einer Lampe senkrecht zur Oberfläche, in die das Markierungslicht eingelassen ist, auf einen Pyramidenspiegel auftrifft und von dessen Oberfläche in Austrittsrichtung reflektiert wird. Die Totalreflexion an der Oberfläche des aufwendigen Pyramidenspiegels führt nicht zu einer Rückreflexion in das Innere der Lampe hinein.

Es ist Aufgabe der Erfindung, eine Leuchteinrichtung, insbesondere ein Unterflurfeuer mit räumlich orientierter Lichtverteilung für Flughafenrollbahnen und -Taxiways anzugeben, die demgegenüber einfacher, kostengünstiger und niedriger ausführbar ist. Darüber hinaus soll auch eine Ausgestaltung als beidseitig abstrahlendes oder rundstrahlendes Unterflurfeuer möglich sein.

Die Aufgabe wird dadurch gelöst, daß ein Teil der lampenseitigen Linsen- oder Prismafläche einen Belag (3,9,10,17,19) mit reflektierenden Eigenschaften aufweist, wobei die Richtung, unter der das Licht der Lampe reflektiert wird, in das Reflektorinnere weist. Durch diese vorteilhaft einfache Ausgestaltung entfällt ein gesondert zu montierendes und zu justierendes Bauteil und das Bauvolumen der Leuchteinrichtung kann vorteilhaft verringert werden.

In Ausgestaltung der Erfindung ist vorgesehen, daß der Belag das Licht der Reflektorlampe gesamtreflektierend ausgebildet ist. Reflektierende Beläge sind nicht zwingend gesamtreflek tierend ausgebildet, für bestimmte Anwendungsfälle kann es sich auch als vorteilhaft erweisen, wenn die reflektierende Schicht nur teilreflektierend ist, z.B. wenn die Abstrahlung des Lichtes in Hell- und Dunkelzonen erfolgen soll. Ein erfindungsgemäß gesamtreflektierender Belag ist aber für eine Abstrahlung von Licht mit besonders hoher Intensität vorteilhaft.

In weiterer Ausgestaltung der Erfindung ist vorgesehen, daß der Belag aus Metall, insbesondere Aluminium, z.B. in aufgedampfter Ausführung, ausgebildet ist. So ergibt sich eine reflektierende Schicht mit besonders guten Dauer-Gebrauchseigenschaften. Anstelle von Aluminium kann auch ein anderes Metall, z.B. eine Silberlegierung, verwendet werden. Aluminium ist jedoch unter Kostengesichtspunkten am günstigsten.

Es ist weiterhin vorgesehen, daß die Richtung, unter der das Licht der Lampe reflektiert wird, in das Reflektorinnere weist. So ist eine einfache erneute Abstrahlung des reflektierten Teils des Lichtes gewährleistet.

Unter Benutzung des Prinzips der Reflektion eines Teils des von der Lampe erzeugten Lichts in den Reflektor der Lampe zurück, kann die Linse oder das Prisma unterschiedliche Ausbildungen aufweisen. Dabei ist es z.B. möglich, daß die Linse oder das Prisma einzelne, voneinander geometrisch getrennte, optisch aktiv zusammenwirkende, Flächenelemente besitzen. So ist z.B. erreichbar, daß die Linse oder das Prisma einen Gürtellinseneffekt erzeugend ausgebildet ist. Dann ergibt sich eine für Unterflurfeuer auf Flughäfen besonders geeignete Ausbildung mit gegebenenfalls besonders günstigen Abstrahleigenschaften.

Auch die Ausbildung der Leuchteinrichtung als Rundstrahler ist möglich. So ist insbesondere für flächige Beleuchtungen, z.B. der Stellfläche von Flugzeugen, für das Vorfeld etc., aber auch für Verkehrswege, Gehwege etc. eine besonders günstige Ausleuchtung der Oberfläche zu erreichen.

Insbesondere für die Verwendung der erfindungsgemäßen Leuchteinrichtung als Runway-End-Feuer oder als Stopp-Bar-Feuer ist vorgesehen, daß die Linse oder das Prisma vorzugsweise zumindest in dem Bereich, der nichtreflektierend ausgebildet ist, einen roten, insbesondere dicroitischen, Belag aufweist. So ergibt sich eine vorteilhafte, kompakte Ausbildung eines mit hoher Intensität abstrahlenden Unterflurfeuers für die vorerwähnten Verwendungszwecke.

Die erfindungsgemäße Leuchteinrichtung ist selbstverständlich nicht nur für die Abstrahlung von weißem oder rotem Licht geeignet. Ebenso vorteilhaft kann auch blaues, grünes oder gelbes Licht abgestrahlt werden. Die Farberzeugung kann dabei auf alle bekannten Arten erfolgen

Die Erfindung wird anhand von Zeichnungen, aus denen ebenso wie aus den Unteransprüchen, weitere, auch erfindungswesentliche, Einzelheiten entnehmbar sind, näher erläutert. Im einzelnen zeigen:
- FIG 1: den Strahlengang bei einer reflektierenden Reflektionsschicht an einem Prisma,
- FIG 2: den Strahlengang in einer in mehrere Richtungen abstrahlenden Leuchteinrichtung,
- FIG 3: eine vergrößerte Darstellung des Bereichs III in FIG 2,
- FIG 4: eine Seitenansicht eines Abstrahlprismas mit einer Filterschicht mit teilweiser Abdeckung durch eine Reflektionsschicht,
- FIG 5: eine perspektivische Darstellung eines Prismas mit abgewinkelter Reflektorfläche,
- FIG 6: einen Schnitt durch ein besonders niedrigbauendes, mit der erfindungsgemäßen Strahlführung arbeitendes Unterflurfeuer sowie
- FIG 7: ein Unterflurfeuer gemäß FIG 6 in der Aufsicht.

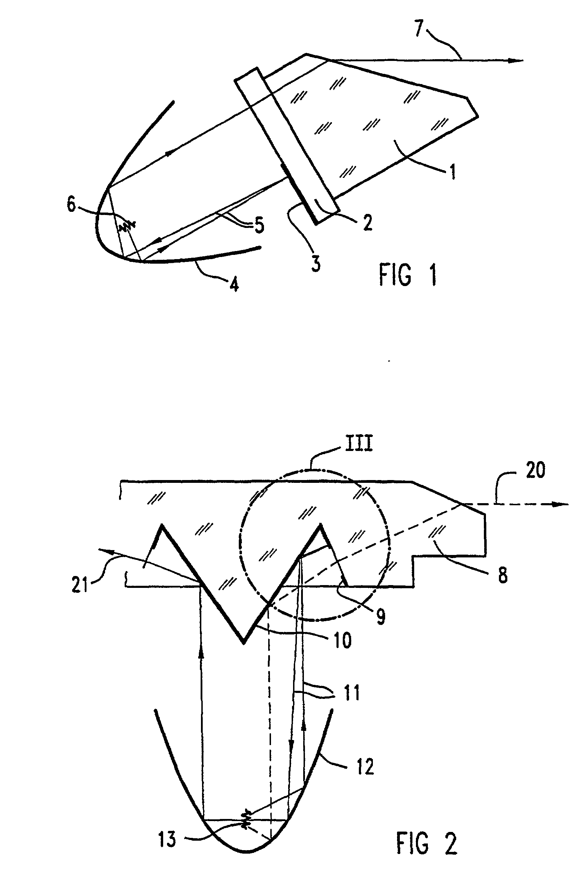

In FIG 1 bezeichnet 1 ein Abstrahlprisma mit einem Arretierungsbund 2. Auf der Lampenseite des Prismas 1 ist eine im Beispiel reflektierende, Schicht 3 angeordnet. Diese Schicht ist z.B. aufgedampft. Eine derartige Schicht kann aber auch aufgespritzt, aufgeklebt etc. sein. Die Lampe mit dem Reflektor 4 und der Wendel 6 erzeugt Licht, das zumindest teilweise entsprechend den gezeichneten Strahlen 5 von der Reflektionsschicht 3 reflektiert, von dem Reflektor 4 erneut reflektiert und als gerichteter Lichtstrahl 7 abgestrahlt wird.

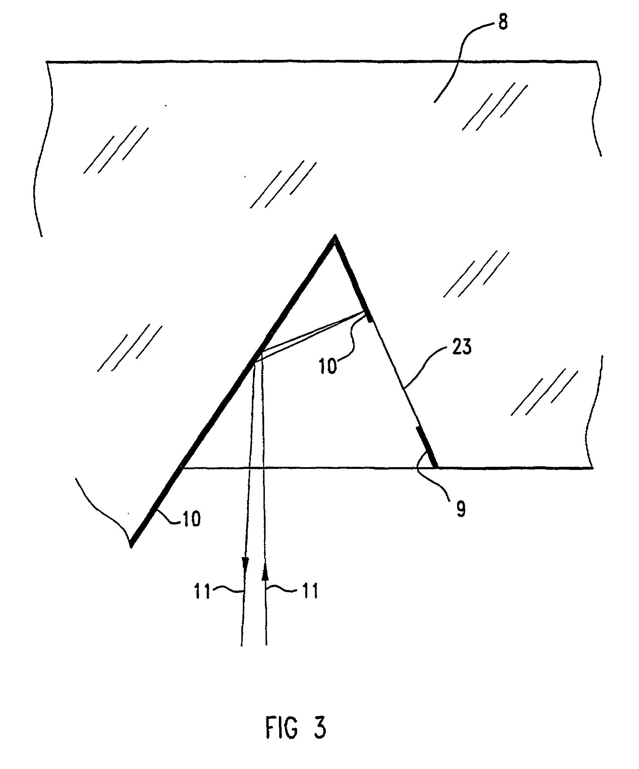

In FIG 2 bezeichnet 8 einen optisch wirksamen Körper mit prismatischen o.ä. Flächen, der vorteilhaft in mehrere Richtungen abstrahlt. Das erfindungsgemäße Prinzip ist durch das Aufbringen von Reflektionsschichten 9 und 10 verwirklicht, die die Strahlen 11 entweder in die Lampe 12 mit der Wendel 13 hineinreflektieren oder derart umlenken, daß sie vorteilhaft direkt als gerichtete Strahlen 20 oder, nach erneutem Passieren des Reflektors 12, als Strahlen 21 aus der Beleuchtungseinrichtung austreten. Die Reflektionsschicht 9 ist vorteilhaft, wie aus FIG 3 ersichtlich, geteilt und läßt eine Austrittsblende 23 frei. Der obere Teil dient dabei als Reflektionsfläche für das Licht 11. Die Reflektionsschicht 10 kann wahlweise auch in ihrem oberen Teil durch optisch wirksame Flächen (Stufen) unmittelbar rückstrahlend und in ihrem unteren Teil wie bei der erstgenannten Ausführung nach dem Gesetz "Einfallswinkel = Ausfallwinkel" abstrahlend, also z.B. einfach beschichtet, ausgebildet sein.

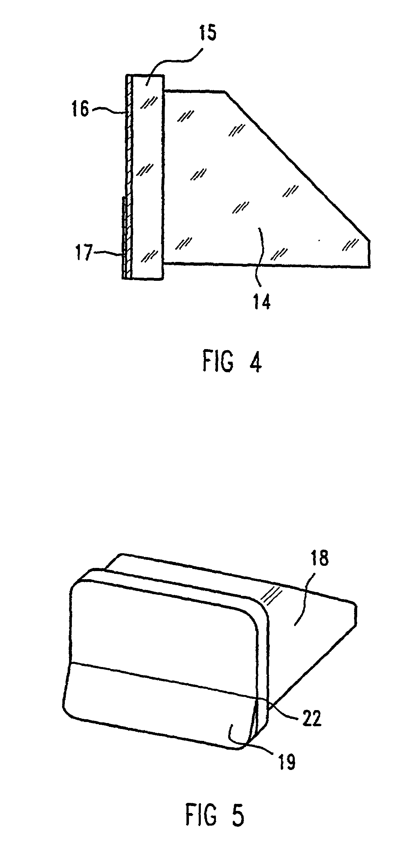

In FIG 4 bezeichnet 14 ein von der Seite gesehenes Prisma mit dem Bund 15. Eintrittsseitig weist das Prisma 14 eine z.B. rote, dicroitische Schicht 16 auf, an deren Außenseite eine Reflektionsschicht 17 angeordnet ist. Eintrittsseitig ist das Prisma 14 vorteilhaft einfach eben ausgeschaltet.

In FIG 5 bezeichnet 18 das Prisma und 19 die reflektierende Schicht, wobei 22 eine Abwinklung in der Eintrittsfläche bezeichnet. Derartige Prismen weisen auf der Innenseite, gegebenenfalls vorteilhaft, keine, wie in FIG 1 und FIG 4 dargestellt, ebene Eintrittsfläche für das Licht auf. Um die optischen Eigenschaften noch günstiger gestalten zu können, wird z.B. eine ebene oder linsenförmige Eintrittsfläche mit einer abgewinkelten Reflektionsfläche verbunden. Die Abwinkelung ist dabei relativ klein, z.B. unter 1°. So ergibt sich eine Linsen-Prismen-Kombination mit optimalen Eigenschaften für die jeweilige Abstrahlaufgabe, das vorteilhaft in der üblichen einfachen Weise montierbar ist.

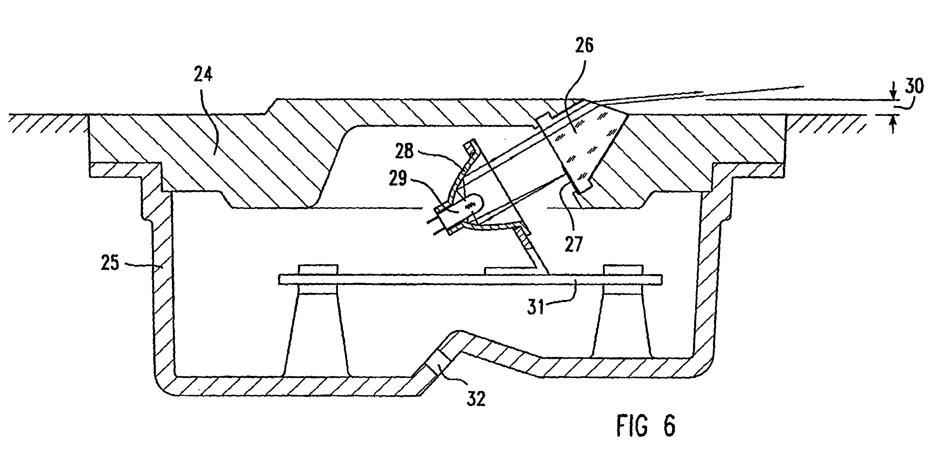

In FIG 6 bezeichnet 24 den Deckel eines besonders niedrig bauenden, durch Schneeräumfahrzeuge gut zu überfahrenden, Unterflurfeuers. Mit 25 ist das Gehäuse des Unterflurfeuers bezeichnet, das eine Kabeldurchführung 32 aufweist. Die durch das Prisma 26 abstrahlende Lampe 29 mit dem Reflektor 28 ist schwingungsgedämpft auf einer Platte 31 angeordnet. Die optische Achse der Lampe 29 verläuft gegebenenfalls vorteilhaft asymmetrisch zur mechanischen Achse des Prismas und ist ebenso wie ihr Neigungswinkel je nach Spezifikation, z.B. durch spezielle Lampenfassungen, abwandelbar. Der Strahlengang ist aus den eingezeichneten Pfeilen ersichtlich. Trotz flughafenspezifikationsgerechter Abstrahlung des Lichts beträgt die Überflurhöhe 30 nur ca. 5 - 7 mm.

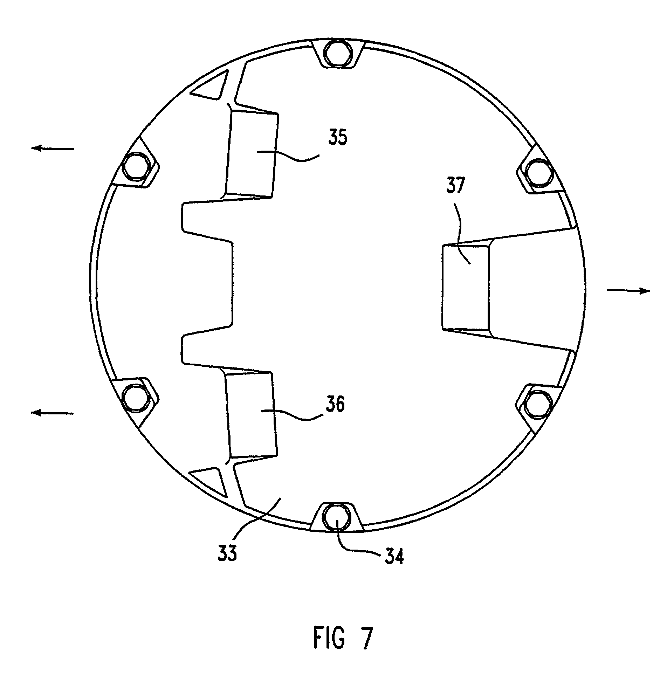

FIG 7 zeigt das erfindungsgemäße Unterflurfeuer beispielhaft - es sind alle auf Flughäfen eingesetzten Unterflurfeuer mit dem erfindungsgemäßen Prinzip ausführbar - in 3-lampiger, bi-direktionaler Ausführung von oben. Die Abstrahlung des Lichts erfolgt durch die Austrittsöffnungen 35, 36 und 37 und ist durch die eingezeichneten Pfeile angedeutet. Der Deckel 33 ist durch Schrauben 34 auf dem nicht sichtbaren Unterteil befestigt.

## Patentansprüche

1. Überrollfähiges Unterflurfeuer mit räumlich orientierter Lichtverteilung für Flughafenrollbahnen und -Taxiways, das in einem Gehäuse zumindest eine Reflektorlampe zur Lichterzeugung und zumindest eine Linse oder ein linsenartig wirkendes Prisma zur Lichtaustrittsführung aufweist, **dadurch gekennzeichnet, daß** ein Teil der lampenseitigen Linsen- oder Prismafläche einen Belag (3,9,10,17,19) mit reflektierenden Eigenschaften aufweist, wobei die Richtung, unter der das Licht der Lampe reflektiert wird, in das Reflektorinnere weist.

2. Unterflurfeuer nach Anspruch 1, **dadurch gekennzeichnet, daß** der Belag (3,9,10,17,19) gesamtreflektierend ausgebildet ist.

3. Unterflurfeuer nach Anspruch 1 oder 2, **dadurch gekennzeichnet, daß** der Belag (3,9,10,17,19) aus Metall, insbesondere aus Aluminium, z.B. in aufgedampfter Ausführung, ausgebildet ist.

4. Unterflurfeuer nach einem oder mehreren der vorhergehenden Ansprüche, **dadurch gekennzeichnet, daß** die Linse oder das Prisma (1,18) einzelne, voneinander geometrisch getrennte, optisch aktiv zusammenwirkende, Flächenelemente (9,10,19,23) besitzt.

5. Unterflurfeuer nach einem oder mehreren der vorhergehenden Ansprüche, **dadurch gekennzeichnet, daß** die Linse oder das Prisma (8,18) einen Gürtellinseneffekt erzeugend ausgebildet ist.

6. Unterflurfeuer nach einem oder mehreren der vorhergehenden Ansprüche, der 6, **dadurch gekennzeichnet, daß** das Prisma (18) als Sektor-Abstrahlprisma ausgebildet ist.

7. Unterflurfeuer nach einem oder mehreren der vorhergehenden Ansprüche, **dadurch gekennzeichnet, daß** sie als Rundstrahler ausgebildet ist.

8. Unterflurfeuer nach Anspruch 1, 2, 3, oder 4, d a**durch gekennzeichnet, daß** die Linse oder das Prisma (14,18) vorzugsweise zumindest in dem Bereich, der nichtreflektierend ausgebildet ist, einen roten, insbesondere dicroitischen, Belag (17,19) aufweist.

9. Unterflurfeuer nach Anspruch 5, 6 oder 7, **dadurch gekennzeichnet, daß** die Linse oder das Prisma (14,18) vorzugsweise zumindest in dem Bereich, der nichtreflektierend ausgebildet ist, einen blauen, grünen oder gelben, insbesondere dicroitischen, Belag (17,19) aufweist.

10. Unterflurfeuer nach einem oder mehreren der vorhergehenden Ansprüche, **gekennzeichnet durch** eine Überflurhöhe von weniger als 10 mm, insbesondere von 5 - 7 mm.

11. Unterflurfeuer nach einem oder mehreren der vorhergehenden Ansprüche, **dadurch gekennzeichnet, daß** die optische Achse der Lampe gegenüber der Achse des Prismas einstellbar ist.

## Claims

1. Flush-marker light, which can be run over, with spatially orientated light distribution for airport runways and taxiways, which has, in a housing, at least one reflector lamp for generating light and at least one lens or a prism acting like a lens for guiding the light exit, **characterized in that** a part of the lens surface or prism surface on the lamp side has a coating (3, 9, 10; 17, 19) having reflecting properties, the direction in which the light from the lamp is reflected pointing into the reflector interior.

2. Flush-marker light according to Claim 1, **characterized in that** the coating (3, 9, 10, 17, 19) is constructed to be totally reflecting.

3. Flush-marker light according to Claim 1 or 2, **characterized in that** the coating (3, 9, 10, 17, 19) is composed of metal, in particular of aluminium, for example in a vapour-deposited finish.

4. Flush-marker light according to one or more of the preceding claims, **characterized in that** the lens or the prism (1, 18) has individual surface elements (9, 10, 19, 23) which are geometrically separated from one another and cooperate optically in an active fashion.

5. Flush-marker light according to one or more of the preceding claims, **characterized in that** the lens or the prism (8, 18) is constructed so as to generate a belt-lens effect.

6. Flush-marker light according to one or more of the preceding claims, of 6, **characterized in that** the prism (18) is constructed as a sector-shaped emitting prism.

7. Flush-marker light according to one or more of the preceding claims, **characterized in that** it is constructed as an omnidirectional radiator.

8. Flush-marker light according to Claim 1, 2, 3, or 4, **characterized in that** the lens or the prism (14, 18) has a red, in particular dichroic, coating, (17, 19), preferably at least in the region which is constructed to be non-reflecting.

9. Flush-marker light according to Claim 5, 6 or 7, **characterized in that** the lens or the prism (14, 18) has a blue, green or yellow, in particular dichroic, coating (17, 19), preferably at least in the region which is constructed to be non-reflecting.

10. Flush-marker light according to one or more of the preceding claims, **characterized by** an elevation of less than 10 mm, in particular of 5-7 mm.

11. Flush-marker light according to one or more of the preceding claims, **characterized in that** the optical axis of the lamp can be adjusted with respect to the axis of the prism.

## Revendications

1. Plot lumineux encastré, à répartition de la lumière orientée dans l'espace, pour des voies et des pistes de roulement d'aéroports, qui comporte dans un coffret au moins une lampe formant réflecteur de production de lumière et au moins une lentille ou un prisme agissant à la manière d'une lentille pour guider la sortie de la lumière, **caractérisé en ce qu'**une partie de la surface de la lentille ou de la surface du prisme se trouvant du côté de la lampe comporte un revêtement (3, 9, 10, 17, 19) ayant des propriétés réfléchissantes, la direction sous laquelle la lumière de la lampe est réfléchie étant tournée vers l'intérieur du réflecteur.

2. Plot lumineux encastré suivant la revendication 1, **caractérisé en ce que** le revêtement (3, 9, 10, 17, 19) est constitué de manière à être réfléchissant dans son ensemble.

3. Plot lumineux encastré suivant la revendication 1 ou 2, **caractérisé en ce que** le revêtement (3, 9, 10, 17, 19) est en métal, notamment en aluminium, par exemple obtenu par dépôt en phase vapeur.

4. Plot lumineux encastré suivant l'une ou plusieurs des revendications précédentes, **caractérisé en ce que** la lentille ou le prisme (1, 18) ont des éléments (9, 10, 19, 23) de surface séparés géométriquement les uns des autres et coopérant du point de vue optique.

5. Plot lumineux encastré suivant l'une ou plusieurs des revendications précédentes, **caractérisé en ce que** la lentille ou le prisme (8, 18) est constitué de manière à produire un effet de lentille de Fresnel.

6. Plot lumineux encastré suivant l'une ou plusieurs des revendications précédentes, **caractérisé en ce que** le prisme (18) est constitué sous la forme d'un prisme de rayonnement à secteur.

7. Plot lumineux encastré suivant l'une ou plusieurs des revendications précédentes, **caractérisé en ce qu'**il est constitué en dispositif de rayonnement omnidirectionnel.

8. Plot lumineux encastré suivant la revendication 1, 2, 3 ou 4, **caractérisé en ce que** la lentille ou le prisme (14, 18) comporte, de préférence tout au moins dans la région qui n'est pas réfléchissante, un revêtement (17, 19) rouge, notamment dichroïque.

9. Plot lumineux encastré suivant la revendication 5, 6, ou 7, **caractérisé en ce que** la lentille ou le prisme (14, 18) comporte, de préférence au moins dans la région où il n'est pas réfléchissant, un revêtement (17, 19) bleu, vert ou jaune, notamment dichroïque.

10. Plot lumineux encastré suivant l'une ou plusieurs des revendications précédentes, **caractérisé par** une hauteur d'encastrement de moins de 10 mm, notamment de 5 à 7 mm.

11. Plot lumineux encastré suivant l'une ou plusieurs des revendications précédentes, **caractérisé en ce que** l'axe optique de la lampe peut être réglé par rapport à l'axe du prisme.
